## Europäisches Patentamt
## European Patent Office
## Office européen des brevets

(19)

(11) Publication number: **0 059 581**
**A2**

(12) # EUROPEAN PATENT APPLICATION

(21) Application number: **82300890.9**

(22) Date of filing: **22.02.82**

(51) Int. Cl.³: **F 28 D 15/00**

(30) Priority: **04.03.81 GB 8106782**

(43) Date of publication of application:
**08.09.82 Bulletin 82/36**

(84) Designated Contracting States:
**DE FR GB SE**

(71) Applicant: **NATIONAL RESEARCH DEVELOPMENT CORPORATION**
**P.O. Box 236 Kingsgate House 66-74 Victoria Street London SW1E 6SL(GB)**

(72) Inventor: **Graveney, Michael James**
**28 Chobham Road Frimley**
**Camberley Surrey(GB)**

(74) Representative: **Miller, Ronald Anthony et al,**
**Procurement Executive, Ministry of Defence Patents 1A4, Room 2014 Empress State Building Lillie Road London SW6 1TR(GB)**

(54) Improvements in heat pipes.

(57) A flat, flexible or conformable heat pipe assembly usable in conditioning clothing and other heat transfer situations. It has a reticulated structure including wicking and void continua, an impermeable plastics film or laminate envelope surrounding the structure and a valve in the assembly by which the assembly may be outgassed and evacuated and liquid introduced thereinto.

Fig.1.

EP 0 059 581 A2

IMPROVEMENTS IN HEAT PIPES

The present invention relates to heat pipes, that is devices for transferring heat from a source to a sink thereof and comprising a sealed tube containing wicking and a free space extending longitudinally of the tube and a quality of liquid sufficient to provide a cycle of liquid flow in the wicking to the source and a vapour flow in the free space to the sink.

The present invention provides a flexible or conformable heat pipe.

According to the present invention a flexible heat pipe comprises a flexible reticulated structure including a wicking element, an impermeable flexible envelope containing the structure, there being vapour flow channels within the envelope and substantially coextensive with the wicking element and valve means for permitting the introduction of heat transfer liquid into the envelope, the evacuation or pressurisation of the envelope, and sealing of the envelope.

The flexible reticulated structure may, for example, be one formed in a three dimensional weaving process involving picking yarns out and thermosetting plastics warp and weft fibre elements, with the wicking perhaps constituting part or all of the weft or warp fibre or perhaps comprising non woven sheets attached to or interwoven by the structure. In their preferred form heat pipes according to the invention are flat with high extent in relation to thickness. In some such embodiments of the invention it may be of value for elements of the structure

2

which support the thickness of the heat pipe to have higher stiffness than the rest, and be, for example, formed of metal or metallised plastics. Whether the wicking forms part of the matrix or is introduced thereinto subsequent to formation thereof a suitable wicking may comprise glass fibre tow or cord, eg 'REFRASIL' (TM).

An alternative flexible reticulated structure may include an uncut velvet structure such as described in UK Patent Specification 1028141. Typically this could be formed of nylon, polyester, or carbon or glass fibre, with or without a stiffening agent.

The envelope suitably comprises a heat sealable plastics film, and is preferably metallised, eg aluminised. It may be a laminate of various materials, eg Mylar (RTM).

The heat pipe may have an associated pump, such as a roughing pump, for maintaining the required pressure in the heat pipe.

A principal role for heat pipes in accordance with the invention is in personal conditioning, for which purpose the heat pipe may be employed in a garment or part thereof or a pad for lying against or close to a body for transferring heat thereto or therefrom. In such circumstances the heat pipe would constitute a source or sink element, and another heat pipe, perhaps similarly in accordance with the invention, might connect the body contacting element with a sink or source element, which might similarly be a heat pipe. The body contacting heat pipe may therefore be a personal conditioning garment formed as a suit covering a torso and perhaps part of the limbs, it may be a poncho style garment for wearing on the shoulders beneath outer clothing, it may be a pad attached to or forming part of a garment, or it may even be a pad attached to a seat etc. A heat pipe forming a garment or part thereof may, for example, in circumstances where it is to be used by aircrew, incorporate means for attenuating the heat pipe function, eg by opening and then closing the valve, to render the heat pipe relatively more insulative.

3

Alternative embodiments of the invention may be employed:

in the collection and description of solar heat energy;

in the removal of heat from hot parts of engines, aircraft, electrical apparatus etc and its transfer to a suitable heat sink;

in the provision of hot or cold surfaces, including working surfaces in storage or work rooms, and central heating elements in domestic, industrial and office buildings.

A method of fabricating a heat pipe according to the invention comprises forming a flexible reticulated structure including a wicking element, forming an impervious flexible envelope to the structure and fitting a valve thereto, evacuating the interior of the envelope and introducing a quantity of a working liquid thereinto. After the introduction of the working liquid the heat pipe may be further out-gassed. The working liquid may be water, and it has preferably been out gassed prior to introduction. An inert gas may be added with the working liquid. Typically the heat pipe is evacuated to $10^{-4} - 10^{-2}$ Torr in a manner which will substantially remove any non-condensable gases within the heat pipe.

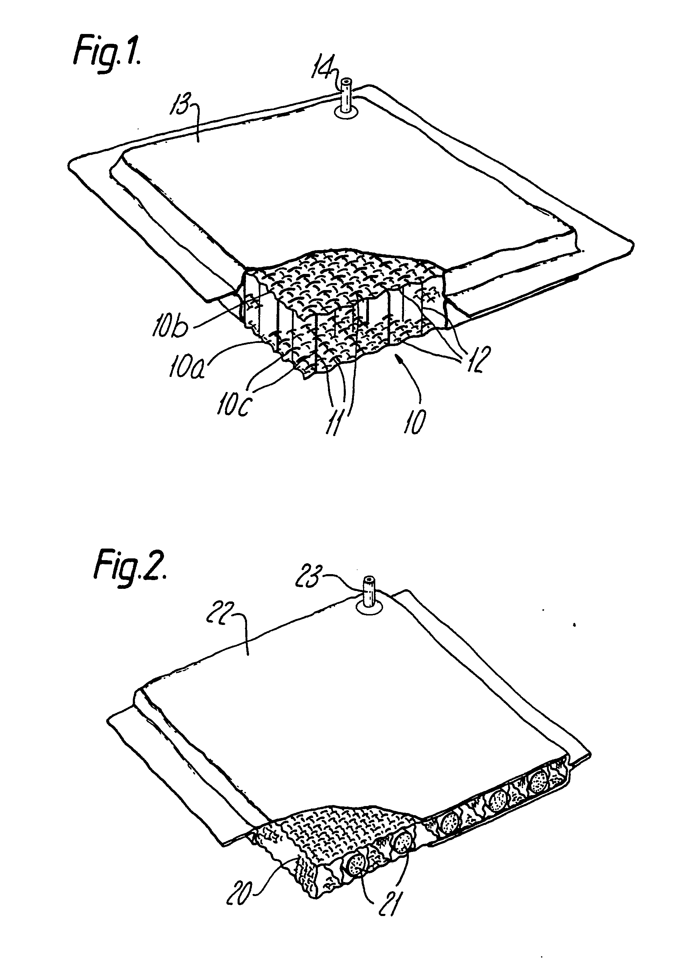

Flexible heat pipes in accordance with the invention will now be described by way of example with reference to the accompanying drawings, of which figure 1 is a part sectioned perspective view of one embodiment of a source/sink conformable heat pipe;

Figure 2 is a part-sectioned perspective view of a heat transfer conformable heat pipe member;

Figure 3 is a part-sectioned perspective view of a second embodiment of a source/sink conformable heat pipe and

Figure 4 is a view in perspective of a conditioning garment heat pipe assembly.

4

The source/sink conformable heat pipe element illustrated in figure 1 has a flexible reticulated structure 10 comprising two opposing flexible plates 10a, 10b and spacer strands 10c. The structure is formed with interwoven wicking[11] and structural plastics filaments[12] forming in both the plates 10a, b, and the spacers 10c. The structure is enclosed in an impermeable flexible envelope 13 formed of aluminised Mylar (RTM). The envelope carries a valve 14 by which fluid can be admitted to the element and the element evacuated.

The heat transfer heat pipe element illustrated in figure 2 comprises a flexible structure 20 woven of plastics filaments in such a manner as to comprise a series of adjacent parallel tubular voids extending the length of the element. Alternate voids contain lengths of wicking 21. The structure is enclosed in an impermeable flexible envelope 22 formed of metallised heat sealable plastics film. The envelope 22 carries a valve 23 by which fluid can be admitted to the element and the element evacuated.

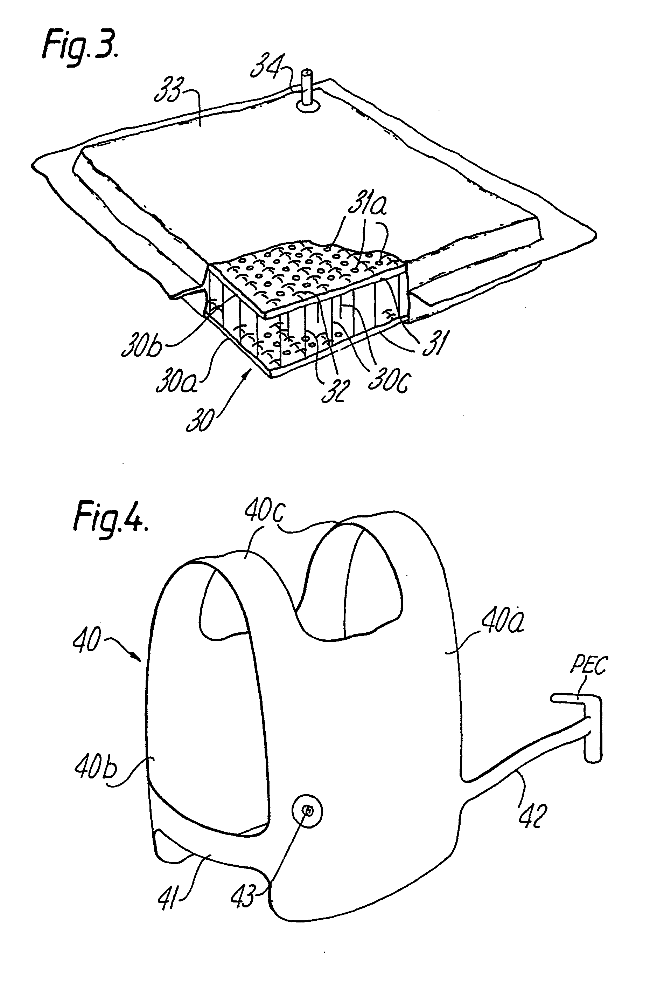

The source/sink conformable element illustrated in figure 3 has a flexible reticulated structure 30 comprising two opposing flexible plates 30a, b and spacer strands 30c. The structure is formed with two non-woven felts 31 perforated as at 31a and interconnected by woven plastics filaments 32 including the strands 30c. The structure is enclosed in an impermeable flexible envelope 33 formed of metallised heat sealable plastics film. The envelope 33 carries a valve 34 by which fluid can be admitted to the element and the element evacuated.

Figure 4 shows a conditioning garment 40 of part poncho style having front and back and shoulder overlying portions 40a, 40b, and 40c, respectively. The portions 40a, b, c are formed of source/sink conformable heat piping of the type described with reference to figure 1. A flexible heat pipe strap 41 links the front and back portion 40a, b at the lower extremities thereof. Another flexible heat pipe strap 42

5

connects the garment 40 with a personal equipment connector PEC and thence with a heat sink (not shown). The straps 41 and 42 are formed as described with reference to figure 2, with the wicking thereof so attached to that of the poncho etc as to form a fluid flow continuum. The garment 40 carries a valve 43 by which fluid can be admitted to the garment and the garment evacuated. The personal equipment connector PEC, which the means by which various services are disconnectably conveyed to and from an aircrewman seated in an ejection seat, has a valve, (not shown) which is open for seat/aircraft separation and closes upon seat/man separation, so that pressure in the garment 40 is allowed to normalise during the seated ejection phase but the garment is sealed again upon seat/man separation with the heat pipe function thereof attenuated.

A method of making a garment as described with reference to figure 4 is to prepare the reticulated structure and wicking of the whole ensemble, ensuring thereby continuity both of the wicking and the channelling, to form the shape or shapes of the portion or portions of plastics film or laminate which will make up the impermeable envelope, to fit the valve 43 to the film or laminate, and to weld the laminate into an envelope around the reticulated structure.

Just before the garment is donned by an aircrewman it is evacuated via the valve to remove non-condensable gases. Water is then introduced to the garment interior and the garment evacuated to the saturated vapour pressure of the working fluid at the desired operating temperature of the garment.

1

CLAIMS

1. A flexible heat pipe comprising a flexible reticulated structure including a wicking element, an impermeable flexible envelope containing the structure, there being vapour flow channels within the envelope and substantially coextensive with the wicking element and valve means for permitting the introduction of heat transfer liquid into the envelope, the evacuation or pressurisation of the envelope, and sealing of the envelope.

2. A flexible heat pipe as claimed in claim 1 and wherein the flexible reticulated structure is one formed in a three dimensional weaving process involving picking yarns out and thermosetting plastics warp and weft fibre elements.

3. A heat pipe as claimed in claim 2 and wherein the wicking constitutes part or all of the weft or warp fibre.

4. A heat pipe as claimed in claim 1 or claim 2 and wherein the wicking comprises non-woven sheets attached to or interwoven by the structure.

5. A heat pipe as claimed in any one of the preceding claims and which is in sheet form with high extent in relation to thickness.

6. A heat pipe as claimed in any one of the preceding claims and wherein elements of the structures which support the thickness thereof are formed of metallised plastics strands.

7. A heat pipe as claimed in claim 1 and wherein the structure includes uncut velvet as described in UK Patent Specification 1028141.

8. A heat pipe as claimed in any one of the preceding claims and wherein the envelope comprises a heat sealable plastics film.

9. A heat pipe as claimed in claim 8 and wherein the envelope comprises MYLAR (RTM).

10. A garment comprising a heat pipe as claimed in any one of the preceding claims.

11. A solar energy element comprising a heat pipe as claimed in any one of the preceding claims.

12. A method of fabricating a heat pipe comprising forming a flexible reticulated structure including a wicking element, forming an impervious flexible envelope to the structure and fitting a valve thereto, evacuating the interior of the envelope and introducing a quantity of a working liquid thereinto.

13. A heat pipe substantially as hereinbefore described with reference to the accompanying drawings.

Fig.1.

13
14
10b
10a
10c
11
10
12

Fig.2.

22
23
20
21

Fig.3.

Fig.4.